(19) Europäisches Patentamt
European Patent Office
Office européen des brevets

(11) Publication number: 0 261 638
A2

(12) EUROPEAN PATENT APPLICATION

(21) Application number: 87113828.5

(22) Date of filing: 22.09.87

(51) Int. Cl.4: C08K 5/03 , C08K 5/06 , C08K 3/00 , H01B 3/30

(30) Priority: 22.09.86 JP 224356/86
19.06.87 JP 152785/87

(43) Date of publication of application:
30.03.88 Bulletin 88/13

(84) Designated Contracting States:
BE DE FR GB IT SE

(71) Applicant: TOYO SODA MANUFACTURING CO., LTD.
No. 4560, Oaza-tonda Shin-nanyo-shi
Yamaguchi-ken(JP)

Applicant: THE FURUKAWA ELECTRIC CO., LTD.
6-1, 2-chome, Marunouchi Chiyoda-ku
Tokyo(JP)

(72) Inventor: Kubo, Masashige
No. 1012 Ohaza Tokuyama
Tokuyama-shi Yamaguchi-ken(JP)
Inventor: Tsutsumi, Yukihiro
No. 538 Kizuki Nakahara-ku
Kawasaki-shi Kanagawa-ken(JP)
Inventor: Okisaki, Fumio
No. 2575 Ohaza Tonda
Shin-nanyo-shi Yamaguchi-ken(JP)
Inventor: Fujimura, Shunichi
No. 3-25, Tatsumidai-higashi
Ichihara-shi Chiba-ken(JP)
Inventor: Fukuda, Teruo
No. 569-84, Semata
Ichihara-shi Chiba-ken(JP)

(74) Representative: Vossius & Partner
Siebertstrasse 4 P.O. Box 86 07 67
D-8000 München 86(DE)

# (54) Radiation-resistant high molecular composition.

(57) A radiation-resistant high molecular composition is disclosed, which comprises a high molecular polymer, a halogenated acenaphthylene and/or condensate thereof represented by the following general formula [I]

EP 0 261 638 A2

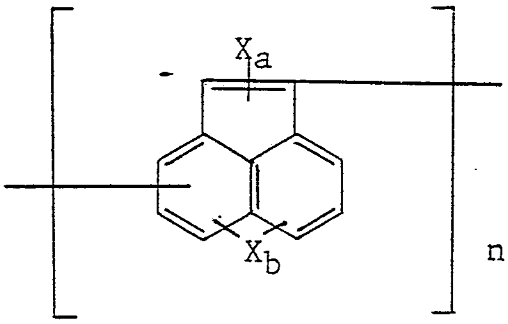

[I]

(wherein X indicates a chlorine or bromine atom, a indicates 0 to 2, b indicates 1 to 6 and n indicates an integer not less than 1), a diphenyl ether derivative represented by the following general formula [II]

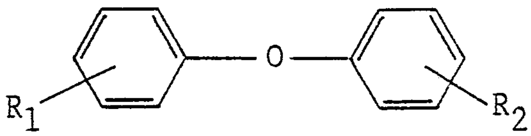

[II]

(wherein $R_1$ and $R_2$ indicate a hydrogen atom, an alkyl, alkoxy, phenyl phenoxy, diphenyloxy or a terphenyloxy group) and/or a basic lead compound.

# RADIATION-RESISTANT HIGH MOLECULAR COMPOSITION

The present invention relates to a high molecular composition having drastically improved radiation resistance, and an electric wire or cable using said high molecular composition as a covering material.

Organic high molecular materials used for nuclear reactors, breeder reactors, treatment facilities of radioactive wastes, ionizing radiation generator or the like, for example, electric wires, cables and various instruments are always exposed to radiation to a considerable extent.

Such high molecular materials having been subjected to the exposure of high doses of radiation in the air generally become hard and brittle to lose the pliability and to weaken, so that the characteristics thereof are lowered remarkably.

For this reason, a high degree of radiation resistance is requested for the high molecular compositions used for the covering and insulating materials of electric wires, cables, etc., packing, seal materials, frames, hose materials, etc. having such purpose of use from the standpoints of economics and safety. The research on the technology to provide radiation resistance to high molecular materials is advancing.

It is known that, by incorporating a halogenated acenaphthylene and/or a condensate thereof represented by the following general formula [I]

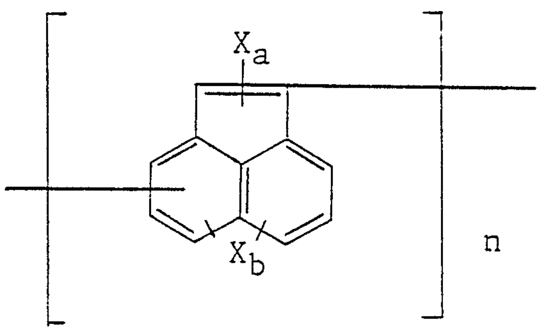

[I]

(wherein X indicates a chlorine or bromine atom, a indicates 0 to 2, b indicates 1 to 6 and n indicates an integer not less than 1) into a high molecular polymer, a high degree of radiation resistance and excellent fire resistance can be provided to the high molecular polymer (Japanese Patent Publication No. Sho 58-1146 and Sho 60-25063).

When incorporating said halogenated acenaphthylene and/or condensate thereof to the high molecular polymer, said halogenated acenaphthylene and/or condensate thereof are usually allowed to melt and disperse into the high molecular polymer by heating at the time of kneading or thermal molding.

As an another method, utilizing the radical polymerization reaction of the double bond between carbon 1 and carbon 2 of the halogenated acenaphthylene unit, a free radical-generated treatment is carried out after the molding to graft onto the high molecular polymer. It is known that an improvement in the radiation resistance and the fire resistance of high molecular polymers can be achieved by these methods.

As a result of investigations on the effect of provision of radiation resistance to the high molecular polymer by the use of halogenated acenaphthylene and/or condensates thereof, the inventors have found that there occurs a significant difference in the development of radiation resistance depending upon the fluctuation of processing conditions, difference in quality of halogenated acenaphthylene and/or condensates thereof and the like.

Namely, when the halogenated acenaphthylene and/or condensate thereof were incorporated into polyolefin resins, rubbers, etc., if the processing temperature was lower than the melting temperature of the halogenated acenaphthylene and/or condensates thereof, or if the condensation composition of the condensates of halogenated acenaphthylene was high, it was recognized that the elongation ratio at the fracture point being a judging criterion of radiation resistance was lowered.

Moreover, when the high molecular compositions containing the halogenated acenaphthylene and/or condensate thereof is to be used for a nuclear reactor, it turned out that the hot-water resistance is poor. Namely, when these high molecular compositions were exposed to high-temperature steam of 150 °C for more than 24 hours, the mechanical properties were retained, but the sheet swelled and the electric properties, in particular, the dielectric breakdown voltage was lowered.

In addition, when incorporated into crosslinked polyethylene, there were such problems that the crosslinking of the polyethylene was hindered. Thus the gel fraction is not increased, the deformation temperature under heat is decreased and the processing problem appeared that the surface of the sheet was roughened at the time of press molding.

Furthermore, as a designing standard of a nuclear power station, the loss of coolant accident (LOCA) is established. The requirement regulations state that it is necessary for the high molecular polymes to retain there good electric characteristics even if exposed to hot steam or hot water after the exposure to radiation. However, if the elongation ratio at the fracture point was lowered after the exposure to radiation as described above, it was also recognized that the electric characteristics were lowered after the exposure to steam. In other words, even after the bromine was eliminated through the exposure to radiation and the brominated acenaphthylene and/or condensates thereof arrived at a stabilized state, the electric characteristics were lowered remarkably by super heated steam or hot water.

It is the object of the present invention to provide a high molecular composition showing a stable high-degree of radiation resistance, hot-water resistance and excellent electric characteristics after the LOCA test which is not influenced by a fluctuation of processing and molding conditions and by the quality of the halogenated acenaphthylene and/or condensates thereof.

In view of these problems of the prior art, the inventors made diligent investigations on the method of improving the radiation resistance of high molecular compositions containing halogenated acenaphthylene and/or condensates thereof. As a result, the inventors have found that, depending on the processing and molding conditions and the difference in the quality of the halogenated acenaphthylene and/or condensates thereof, the dispersibility and the compatibility in the high molecular polymer differ subtly to affect significantly the development of various characteristics.

In order to solve this problem, the inventors searched for additives not affecting adversely the physical properties of the high molecular compositions, such as agents for improving the dispersibility of the halogenated acenaphthylene and/or condensates thereof, and a trapping agent for the hydrogen halide formed by de-halogenation.

As a result, various kinds of high molecular resins, rubbers, ester plasticizers, paraffinic and aromatic process oils, various lubricants, etc. proved to hardly improve the dispersibility and, the incorporation of metal oxides such as zinc white, magnesium oxide, antimony trioxide, etc. caused swelling by hot water and did not prevent the lowering of the electric characteristics.

The inventors have found that, when formulating a composition comprising a diphenyl ether derivative represented by the following general formula [II]

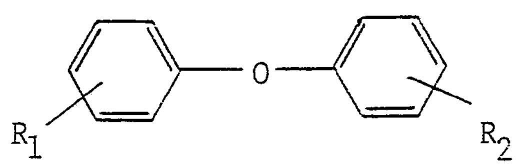

[II]

(wherein $R_1$ and $R_2$ indicate a hydrogen atom, an alkyl, alkoxy, phenyl, phenoxy, diphenyloxy or a terphenyloxy group) and/or basic lead compound in the high molecular polymer in an appropriate amount in addition to the halogenated acenaphthylene and/or condensates thereof represented by the following general formula [I]

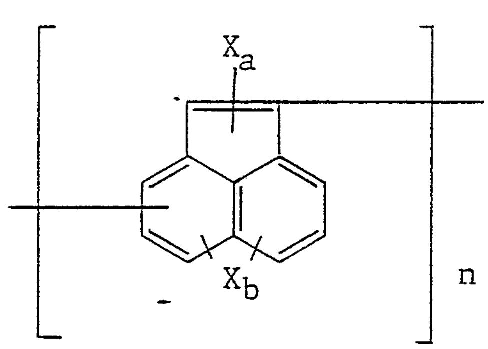

[I]

(wherein X indicates a chlorine or bromine atom, a indicates 0 to 2, b indicates 1 to 6 and n indicates an integer not less than 1), the dispersibility of the halogenated acenaphthylene and/or condensates thereof in the high molecular polymer is improved remarkably and specifically and the radiation resistance and

various characteristics of the high molecular composition are enhanced to develop stably.

Further, the incorporation of these diphenyl ether derivatives and/or basic lead compounds has been found not to affect adversely on the crosslinking characteristics of the high molecular polymer and also on the electric and mechanical characteristics. This resulted in the completion of the invention.

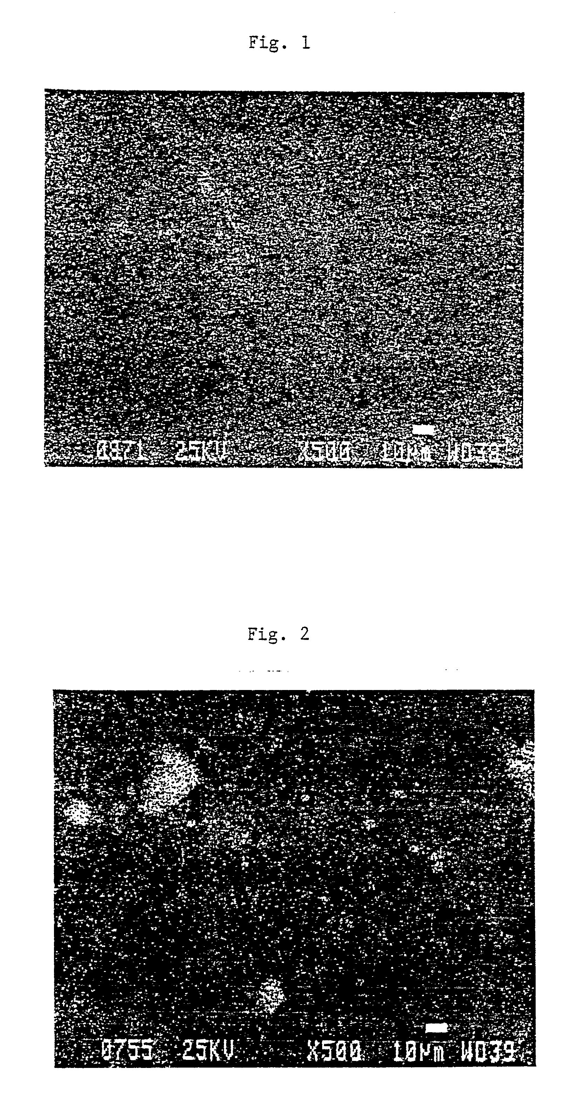

Fig. 1 is photograph showing the dispersibility of brominated acenaphthylene condensates on the surface of a molded sheet of the polymer composition of the present invention, which was measured by the use of an X-ray microanalyzer, and Fig. 2 is a photograph measured at a comparative example.

In the following, an explanation will be made in more detail.

The radiation-resistant high molecular composition of the present invention can be achieved by formulating the halogenated acenapthylene and/or condensates thereof and diphenyl ether derivative and/or basic lead compound to the high molecular polymer. Examples of high molecular polymers, the radiation resistance of which should be improved, are thermoplastic resins such as polyethylene, polypropylene, polybutene, ethylene-vinyl acetate copolymer, ethylene-ethyl acrylate copolymer, ethylene-propylene copolymer, ethylene-propylene-diene copolymer, ethylene-vinyl chloride copolymer, ethylene-vinyl acetate-grafted vinyl chloride copolymer, ethylene-ethyl acrylate-grafted vinyl chloride copolymer, ethylene-propoylene-grafted vinyl chloride copolymer, chlorinated polyethylene, chlorinated polyethylene-grafted vinyl chloride copolymer, polyamides, acrylic resins, etc., elastomers, polyesters, polyurethanes, thermosetting resins such as epoxy resin, phenol resin, melamine resin, urea resin, etc., butyl rubber, chloroprene rubber, nitrile rubber, natural rubber, silicone rubber, chlorosulfonated polyethylene, styrene-butadiene rubber, styrene-butadiene-acrylonitrile copolymer and polyester-ether elastomer.

Among them, polyolefin resins represented by polyethylene and polyolefin elastomers represented by ethylene-propylene-diene copolymer are general-purpose polymers having various characteristics excellent in the electric characteristics, chemical resistance, etc. Since the inflammability being a shortcoming thereof can also be improved according to the present invention, they are the most suitable polymers.

The halogenated acenaphthylene and/or condensates thereof referred to so in the present invention are shown by the following general formula [I]

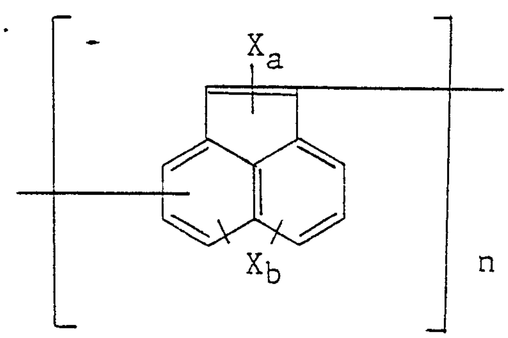

[I]

(wherein, X, a, b and n are same as above), i.e. compounds having at least one halogen atom on the aromatic rings of the acenaphthylene. The condensates are those wherein the halogenated acenaphthene is condensed through the Friedel-Craft reaction to a multimer with a condensation degree of two or more and, successively, a carbon-carbon double bond is formed in the benzyl position through a dehydrohalogenation reaction.

The bonding pattern of the condensates is an intermolecular bonding between the carbon in the benzyl position of one acenaphthylene and the carbon in the allyl position of another acenaphthylene. As the bonding points, for example, 1 (or 2), 5'-

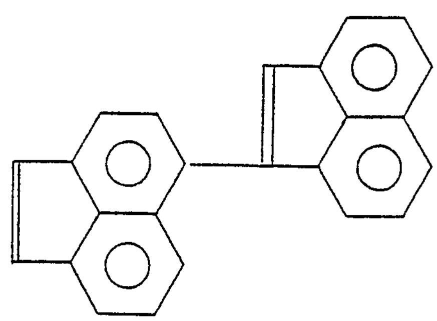

1 (or 2), 6′-

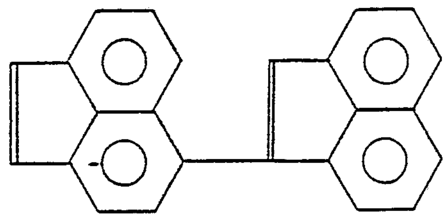

or the like are exemplified, but, besides of these, bondings at 1 (or 2), 3′-, 1 (or 2), 4′-, 1 (or 2), 7′-, 1 (or 2), 8′-, etc. are possible.

With regard to condensates with a bonding degree of three or more, the constitution unit is allowed to increase by any one of such bondings. The condensates referred to in the present invention are those with a condensation degree of not more than 10, which are excellent in compatibility with resins.

The amount of the halogenated acenaphthylene and/or condensates thereof to be incorporated into the high molecular polymer is preferably 5 to 150 parts by weight per 100 parts by weight of high molecular polymer in order to secure good radiation resistance at the lower limit and elongation characteristics, pliability, etc. of the high molecular composition at the upper limit. Below 5 parts by weight, the radiation resistance is not sufficiently increased. Amounts of over 150 parts by weight hardly show an additional effect.

The diphenyl ether derivatives referred to in the present invention are compounds represented by the following general formula [II]

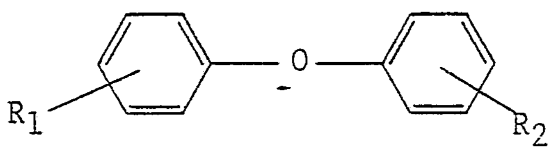

[II]

(wherein, $R_1$ and $R_2$ are same as above), or a mixture of these.

For example, diphenyl ether, monoalkyldiphenyl ether, dialkyldiphenyl ether, monoalkoxydiphenyl ether, dialkoxydiphenyl ether, phenoxydiphenyl, phenylphenoxydiphenyl, phenoxydiphenyl ehter, diphenoxydiphenyl ether, phenoxypheoxydiphenyl, phenoxyphenoxyterphenyl, etc. can be mentioned concretely.

The amount of these diphenyl ether derivatives to be incorporated is selected within a range of 1 to 100 parts by weight per 100 parts by weight of halogenated acenaphthylene and/or condensates.

Below 1 part by weight, the effect of uniformly dispersing the halogenated acenaphthylene and/or condensates thereof into the high molecular polymer is insufficient. On the other hand, more than 100 parts by weight, hardly show an additional effect.

The basic lead compounds referred to in the present invention are compounds selected from lead oxides, lead hydroxides, lead phosphates, lead phosphites, lead carbonates, lead sulfites, lead carboxylates, lead sulfides, lead borates and lead metaborates or double salts containing these as components. Moreover, mixtures of these are also included. For example, concretely, lead monoxide (PbO), red lead ($Pb_3O_4$), white lead ($2PbCO_3 \bullet Pb(OH)_2$), lead dioxide ($PbO_2$), tribase ($ePbO \bullet PbSO_4 \bullet H_2O$), basic lead silicate ($PbO \bullet H_2O \bullet 2PbSiO_3$), dibasic lead phosphite ($2PbO \bullet PbHPO_3 \bullet 1/2H_2O$), debasic lead phthalate ($2PbO \bullet Pb(C_8H_4O_4)$), tribasic lead maleate ($3PbO \bullet Pb(C_4H_2O_4) \bullet H_2O$), lead silicate precipitated together with silica gel ($PbSiO_3 \bullet mSiO_2$), lead salicylate ($Pb(C_7H_5O_3)_2$), lead stearate ($Pb(C_{18}H_{35}O_2)_2$), dibasic lead stearate ($2PbO \bullet Pb(C_{18}H_{35}O_2)_2$), lead naphthenate ($Pb(C_nH_{2n-1}O_2)_2$), lead acetate ($Pb(C_2H_3O_2)_2$), lead oxalate ($PbCrO_4$), basic lead sulfite ($PbO \bullet PbSO_3$), lead phosphate ($Pb_3(PO_4)_2$), lead carbonate ($PbCO_3$), lead metaborate ($Pb(BO_2)_2$), lead borate ($Pb_3(BO_4)_2$), etc. can be mentioned.

Further, the basic lead compounds used in the present invention are preferably powdery compounds having a specific surface area of at least 0.1 $m^2/g$ determined by the BET method.

Basic lead compounds having a specific surface area of not less than 0.1 $m^2/g$, bring about a remarkable improvement of the hot-water resistance, whereas, with a specific surface area of under 0.1 $m^2/g$, almost no effect on the improvement in hot-water resistance is seen.
Even if the addition amount is increased, the effect is small.

The upper limit of the specific surface area is not particularly confined, but usually it is around 50 $m^2/g$.

The amount of these basic lead compounds to be incorporated is selected within a range of 10 to 100 parts by weight per 100 parts by weight of halogenated acenaphthylene and/or condensates thereof.

Below 10 parts by weight, the effect to improve the hot-water resistance is insufficient. on the other hand, more than 100 parts by weight hardly have an additional effect.

The reason why the improved dispersibility of the halogenated acenaphthylene and/or condensate thereof in the high molecular polymer enhances the radiation resistance is not entirely clear. However, through the uniform dispersion, the following two points may result in the inhibition of deterioration of the polymer, so that the radiation resistance would be developped; the acenaphthylene derivatives act effectively as trap sites of excitation energy generated by the irradiation to enhance the transfer efficiency of the excitation energy, and the formed polymer radicals are effectively captured.

The reason is also not quite clear why the hot-water resistance of the high molecular composition is improved conspicuously by the incorporation of basic lead compounds. However, sorption of moisture by hydrogen halide gas byproduced, although in very small amounts, by heating or exposure to high-temperature steam is considered to be responsible for the lowering of the electric characteristics. On the other hand, the incorporation of the basic lead compounds results in effective capture of said byproduced hydrogen halide gas and formation of water-insoluble salts. Consequently, the hot-water resistance is considered to be improved.

Addition of suitable reinforcement agents, extenders, pigments, lubricants, vulcanizing agents, crosslinking assistants, antioxidants, ultraviolet absorbers, flame retardation, assistants etc. to the compositions of the present invention may safely be applicable in appropriate amount within a range not lowering the characteristics thereof depending on the purpose of use etc.

As a formulating recipe in the present invention, the halogenated acenaphthylene and/or condensates thereof and the diphenyl ether derivatives and/or basic lead compound are added to the high molecular polymer and then, by heating sufficiently at the time of kneading, the halogenated acenaphthylene and/or condensates thereof are allowed to melt and disperse uniformly into the high molecular polymer.

Depending on the kind of the resin a free radical-generating treatment may be carried out during molding of the high molecular composition.This can be done by chemical crosslinking comprising the incorporation of organic peroxides such as dicumyl peroxide etc. and heating, and by the so-called radiation crosslinking wherein ionizing radiation such as $\beta$-rays, $\gamma$-rays, electron beams, etc. is used. The halogenated acenaphthylene and/or condensates thereof are grafted onto the high molecular substrate and simultaneously a crosslinking treatment is given to the high molecular polymer.

In particular, the utilization of thus crosslinked high molecular compositions of the present invention for covering materials of electric wires and cables is effective to make them long living under the environment of radiation, so that the value of industrial utilization is very large.

The crosslinking method in this case is preferably the use of organic peroxide compounds as crosslinking agents. It is performed under moisture-free condition. For example there are methods wherein a molten salt bath, Wood's metal bath, liquid paraffin bath, bath of nonoxidative inert gas, heated metal tube, etc. are utilized, methods wherein heating means such as high-frequency heating, microwave heating, infrared heating, fluidized bed heating, etc. are used independently or in combination, and the like. When using the high molecular compositions of the present invention as covering material of electric wires and cables, the method using a molten salt bath is preferred and, in more detail, a molten salt bath containing sodium nitrate, potassium nitrate and sodium nitrite as the major components is particularly preferred.

The temperature at the time of crosslinking has only to be above the decomposition temperature of the organic peroxide crosslinking agent used.

The coating of wires can be carried out by extrusion of the composition on a conductor in the desired thickness according to usual methods.

The insulating wire cores thus obtained can be provided with protective sheaths to prevent external injuries. In other cases, a plurality of insulated wire cores are collected to form cable cores and protective sheaths are provided similarly onto said cable cores.

Crosslinked plastics of vulcanized rubbers are preferred for the sheath from the aspect of mechanical and thermal characteristics. With the application of the method of the present invention and the provision of the sheath layer of crosslinked plastics or vulcanized rubbers, a coated wire having further improved characteristics can be obtained.

As such sheath materials, vinyl chloride resin, chlorosulfonated polyethylene, chloroprene rubber, etc. are applicable. In particular, chlorosulfonated polyethylene is suitable for the purpose of the present invention because of its excellent radiation resistance, water resistance and fire resistance.

The present invention wil be further illustrated based on the examples, but is not confined to them.

Example 1 through 3 and Comparative example 1 and 2

To ethylene-propylene-diene copolymer were added formulating agents to give compositions as shown in Table 1. Besides, the unit of the amount of the respective ingredients in the examples below is part by weight.

After uniformly kneading all ingredients except the free radical-generating agent on a hot roll of 160 °C, the free radical-generating agent was added at 20 to 70 °C. Then, the mixtures were heated for 30 minutes under pressure using a hot press of 160 °C to mold sheets with a thickness of 1 mm.

Besides, the halogenated acenaphthylene and/or condensates thereof used in these examples are a condensed bromoacenaphthylene composition specified as follows:

Content of bromine 55.7%
Melting point 125-143 °C
Condensate composition
Monomer 19.0%
Dimer 19.5%
Trimer 18.9%
Tetramer to octamer 42.6%

The condensate composition was determined by means of high performance liquid chromatography using a column with an inner diameter of 7.5 mm and a length of 600 mm packed with TSK gel G1000H8 (made by Toyo Soda Mfg. Co.).

The sheets obtained with the respective compositions were irradiated with 200 Mrad of $\gamma$-ray at a dose rate of 0.5 Mrad/hr at room temperature in the air. The mechanical characteristics before and after the irradiation were determined according to JIS C3005 to estimate the radiation resistance of the respective samples. The results are shown in Table 1.

Further, the change of the grafting ratio of the halogenated acenaphthylene and/or condensates thereof onto the high molecular polymer before and after the irradiation with $\gamma$-rays was determined by Soxhlet extraction with tetrahydrofuran. The results obtained are shown in Table 1.

Moreover, the dispersion degree of condensed bromoacenaphthylene in the surface of the respective sheets was measured with Brk$\alpha$ line by the use of an X-ray microanalyzer. The dispersion in the sheet of Example 1 and that in the sheet of Comparative example 1 are shown in Fig. 1 and Fig. 2, respectively. The white dots show the existence of bromine atoms.

Table 1

| Formulating agent and characteristics | | Example 1 | Example 2 | Example 3 | Comparative example 1 | Comparative example 2 |
|---|---|---|---|---|---|---|
| Etylene-propylene-diene copolymer *1 | | 100 | 100 | 100 | 100 | 100 |
| Nocrac 224 *2 | | 1.5 | 1.5 | 1.5 | 1.5 | 1.5 |
| Sulfur | | 0.4 | 0.4 | 0.4 | 0.4 | 0.4 |
| Talc | | 100 | 100 | 100 | 100 | 100 |
| Zinc white | | 5 | 5 | 5 | 5 | 5 |
| Antimony trioxide | | 11.8 | 11.8 | 11.8 | 11.8 | |
| Dicumyl peroxide | | 3 | 3 | 3 | 3 | 3 |
| Condensed bromoacenaphythylene composition | | 45 | 45 | 45 | 45 | 45 |
| m-(m-Phenoxyphenoxy)diphenyl | | 5 | | | | 5 |
| Monoalkyldiphenyl ether *3 | | | 5 | | | |
| Dialkyldiphenyl ether *3 | | | | 5 | | |
| Uniform dispersion of brominated acenaphthylene condensate composition in sheet | | Excel-lent | Excel-lent | Excel-lent | No good | - |
| (Mechanical characteristics) | | | | | | |
| Initial | Tensile strength ($Kg/mm^2$) | 0.88 | 0.76 | 1.11 | 0.82 | 0.88 |
| | Elongation (%) | 640 | 695 | 660 | 752 | 765 |
| After ir-radiation | Tensile strength ($Kg/mm^2$) | 0.87 | 0.87 | 1.03 | 0.98 | 0.98 |
| | Elongation (%) | 145 | 143 | 165 | 70 | 53 |
| (Electric characteristic) Volume resistance (Ω-cm)(21°C) | | $3.5 \times 10^{15}$ | $4.3 \times 10^{15}$ | $4.6 \times 10^{15}$ | $3.6 \times 10^{15}$ | $2.6 \times 10^{15}$ |

| Formulating agent and characteristics | Example | | | Comparative example | |
|---|---|---|---|---|---|
| | 1 | 2 | 3 | 1 | 2 |
| (Grafting ratio of condensed bromoacenaphthylene composition) (%) | | | | | |
| Initial | 25.2 | 26.0 | 25.9 | 21.4 | - |
| After irradiation | 40.4 | 42.3 | 41.3 | 33.6 | - |

*1 Made by Japan Synthetic Rubber Co., EP-21 (Bonding amount of propylene: 40 % by weight).

*2 Made by Oouchi Shinko Co., 2,2,4-Trimethyl-1,2-dihydroquinoline copolymer.

*3 Number of carbon atoms in alkyl moiety: 16

The condensed bromoacenaphthylene composition used in Example 1 through 5 and Comparative example 1 through 3 contains as much as 42.6 % of the high-condensation components of tetra-to octamer and their amount in the composition is high. When this composition is added without the diphenyl ethers to the high molecular polymer, the effect to improve the radiation resistance, which is shown by the fracture elongation after the irradiation with $\gamma$-rays, is small.

On the other hand, the condensed bromoacenaphthylene composition used in Example 6 through 9 and Comparative example 4 through 8 described later contains as little as 18.5 % of the tetra-to octamer and their amount in the composition is low. With the addition of this composition, high radiation resistance can be developed stably.

As described above, the effect of the addition on the radiation resistance clearly depends on the condensate composition of the condensed bromoacenaphthylene.

However, as evident from Table 1 and Fig. 1, even when brominated acenaphthylene condensates having a high condensation degree were used, uniform dispersion thereof was achieved by the addition of the diphenyl ether derivatives of the present invention. The mechanical characteristics after the irradiation were also excellent. In particular, the lowering in the elongation characteristic was suppressed. Without diphenyl ether derivative (Comparative example 1), the deterioration of mechanical characteristics after the irradiation was remarkable as a result of the inhomogenous dispersion, as shown in Fig. 2, due to partial aggregation of the brominated acenaphthylene condensates. Moreover, in the case of addition of the diphenyl ether derivative alone (Comparative example 2), the radiation resistance was not improved.

On the other hand, the uniform dispersion of condensed bromoacenaphthylene enhanced its grafting before and after $\gamma$-ray irradiation. This fact results in effective capture of polymer radicals generated by the $\gamma$-ray irradiation as well as in the promotion of the transfer of the excitation energy.

Moreover, the addition of diphenyl ether derivatives hardly affects adversely the crosslinking of the polymer and the electrical characteristics.

Example 4 and 5 and Comparative example 3 and 4

To polyethylene, the formulating agents were added so as to give the composition shown in Table 2. These were kneaded well on a heated roll and the composition thus obtained were molded under pressure for 30 minutes at 160° C to prepare sheets with a thickness of 1 mm.

On the respective sheets obtained, the dispersion of the condensed bromoacenaphthylene, the initial mechanical characteristics and those after the irradiation of 200 Mrad of γ-rays were determined. The results are shown in Table 2.

Table 2

| Formulating agent and characteristics item | | Example 4 | Example 5 | Comparative example 3 | Comparative example 4 |
|---|---|---|---|---|---|
| Polyethylene *4 | | 100 | 100 | 100 | 100 |
| Nocrac 300 *5 | | 0.5 | 0.5 | 0.5 | 0.5 |
| Dicumyl peroxide | | 3 | 3 | 3 | 3 |
| Antimony trioxide | | 11.8 | 11.8 | 11.8 | |
| Condensed bromoacenaphythylene. composition | | 45 | 45 | 45 | |
| m-(m-phenoxyphenoxy)diphenyl | | 5 | | | 5 |
| Monoalkyldiphenyl ether | | | 5 | | |
| Uniform dispersion of condensed bromoacenaphthylene in sheet | | Excellent | Excellent | No good | - |
| (Mechanical characteristics) | | | | | |
| Initial | Tensile strength (Kg/mm²) | 2.31 | 2.25 | 1,97 | 2.30 |
| | Elongation (%) | 510 | 495 | 488 | 513 |
| After irradiation | Tensile strength (Kg/mm²) | 1.82 | 1.88 | 1.42 | 1.37 |
| | Elongation (%) | 170 | 182 | 90 | 55 |

*4 Density: 0.920, MI: 1,0

*5 Made by Oouchi Shinko Co., 4,4'-Thiobis(6-t-butyl-3-methylphenol).

Examples 6 through 9 and Comparative example 5 through 8

The sheets of Table 3 were prepared in the same procedure as described for example 1. The molded sheets were exposed to high-temperature steam of 150 °C, 4.9kg/cm² for 24 hours. Then the hote-water resistance of each specimen was estimated by the volume resistance and the dielectric breakdown voltage. The results, as well as the other results obtained in the similar manner to example 1 are shown in Table 3.

Besides, the halogenated acenaphthylene and/or condensates therof used in these examples are a condensed bromoacenaphthylene composition specified as follows:

Content of bromine 55.7 %

Melting point 125-143 °C

Condensate composition

Monomer 17.6 %

Dimer 36.0 %%

Trimer 28.0 %

Tetramer to octamer 18.4 %

The condensate composition was determined by the same method as in the previous examples.

Table 3 (1)

| Formulating agent and characteristics item | | Example | | | |
|---|---|---|---|---|---|
| | | 6 | 7 | 8 | 9 |
| Ethylene-propylene-diene copolymer *1 | | 100 | 100 | 100 | 100 |
| Nocrac 224 *2 | | 1.5 | 1.5 | 1.5 | 1.5 |
| Sulfur | | 0.4 | 0.4 | 0.4 | 0.4 |
| Talc | | 100 | 100 | 100 | 100 |
| Zinc white | | 5 | 5 | 5 | 5 |
| Stearic acid | | 1 | 1 | 1 | 1 |
| Antimony trioxide | | 11.8 | 11.8 | 11.8 | 11.8 |
| Dicumyl peroxide | | 3 | 3 | 3 | 3 |
| Condensed bromoacenaphthylene | | 45 | 45 | 45 | 45 |
| White lead | | 15 | | | |
| Tribase | | | 15 | | |
| Litharge | | | | 30 | |
| Dibasic lead phthalate | | | | | 10 |
| Lead chloride | | | | | |
| Specific surface area of lead compound *3 | | 1.20 | 1.92 | 0.34 | 0.83 |
| (Radiation resistance) | | | | | |
| Initial | Tensile strength (Kg/mm$^2$) | 0.87 | 0.91 | 0.77 | 0.80 |
| | Elongation (%) | 640 | 670 | 710 | 695 |
| After irradiation | Tensile strength (Kg/mm$^2$) | 0.86 | 0.77 | 0.82 | 0.92 |
| | Elongation (%) | 145 | 160 | 155 | 145 |
| (Fire resistance) Oxygen index | | 36.4 | 34.8 | 36.0 | 34.2 |

| Formulating agent and characteristics item | | Example | | | |
|---|---|---|---|---|---|
| | | 6 | 7 | 8 | 9 |
| (Hot-water resistance) | | | | | |
| Initial | Volume resistance (Ω-cm) | $4.5x10^{15}$ | $5.1x10^{15}$ | $3.6x10^{15}$ | $4.2x10^{15}$ |
| | Dielectric breakdown voltage (kV/mm) | 24.3 | 24.6 | 22.9 | 22.3 |
| After exposure | Volume resistance (Ω-cm) | $5.1x10^{15}$ | $5.0x10^{15}$ | $2.9x10^{15}$ | $4.5x10^{15}$ |
| | Dielectric breakdown voltage (kV/mm) | 24.8 | 24.0 | 22.6 | 22.8 |

*1 Made by Japan Synthetic Rubber Co., EP-21(Bonding amount of propylene: 40 % by weight).

*2 Made by Oouchi Shinko Co., 2,2,4-trimethyl-1,2-dihydroquinoline copolymer.

*3 Determined by BET method

Table 3 (2)

| Formulating agent and characteristics item | | Comparative example | | | |
|---|---|---|---|---|---|
| | | 5 | 6 | 7 | 8 |
| Ethylene-propylene-diene copolymer *1 | | 100 | 100 | 100 | 100 |
| Nocrac 224 *2 | | 1.5 | 1.5 | 1.5 | 1.5 |
| Sulfur | | 0.4 | 0.4 | 0.4 | 0.4 |
| Talc | | 100 | 100 | 100 | 100 |
| Zinc white | | 5 | 5 | 5 | 5 |
| Stearic acid | | 1 | 1 | 1 | 1 |
| Antimony trioxide | | 11.8 | 11.8 | 11.8 | 11.8 |
| Dicumyl peroxide | | 3 | 3 | 3 | 3 |
| Condensed bromoacenaphthylene | | 45 | 45 | 45 | 45 |
| White lead | | | 3 | | |
| Tribase | | | | | |
| Litharge | | | | | |
| Dibasic lead phthalate | | | | 30 | |
| Lead chloride | | | | | 15 |
| Specific surface area of lead compound *3 | | - | 1.20 | 0.06 | 1.31 |
| (Radiation resistance) | | | | | |
| Initial | Tensile strength (kg/mm²) | 0.82 | 0.93 | 1.03 | 0.87 |
| | Elongation (%) | 752 | 660 | 595 | 630 |
| After irradiation | Tensile strength (kg/mm²) | 0.86 | 0.90 | 0.95 | 0.85 |
| | Elongation (%) | 150 | 143 | 141 | 151 |
| (Fire resistance) | | | | | |
| Oxygen index | | 34.8 | 35.0 | 34.2 | 36.0 |

| Formulating agent and characteristics item | | Comparative example 5 | Comparative example 6 | Comparative example 7 | Comparative example 8 |
|---|---|---|---|---|---|
| (Hot-water resistance) | | | | | |
| Initial | Volume resistance (Ω-cm) | $4.1 \times 10^{15}$ | $3.7 \times 10^{15}$ | $4.7 \times 10^{15}$ | $5.5 \times 10^{15}$ |
| | Dielectric breakdown voltage (kV/mm) | 22.0 | 22.9 | 24.7 | 22.3 |
| After exposure | Volume resistance (Ω-cm) | $2.8 \times 10^{10}$ | $1.8 \times 10^{11}$ | $3.1 \times 10^{12}$ | $4.8 \times 10^{11}$ |
| | Dielectric breakdown voltage (kV/mm) | 5.8 | 6.7 | 8.2 | 6.5 |

*1 Made by Japan Synthetic Rubber Co., EP-21(Bonding amount of propylene:40 % by weight).

*2 Made by Oouchi Shinko Co., 2,2,4-trimethyl-1,2-dihydroquinoline copolymer.

*3 Determined by BET method

Example 10 through 12 and Comparative example 9 and 10

The sheets of Table 4 were prepared in the same procedure as described for example 3

The state of respective sheets thus made up was observed, and the gel fraction and heat deformation rate were measured. In addition, the fire resistance, radiation resistance and hot-water resistance were estimated according to Example 6. The results are shown in Table 4.

Table 4

| Formulating agent and characteristics item | | Example | | | Comparative example | |
|---|---|---|---|---|---|---|
| | | 10 | 11 | 12 | 9 | 10 |
| Polyethylene *4 | | 100 | 100 | 90 | 100 | 90 |
| Ethylene-vinylacetate copolymer *5 | | | | 10 | | |
| stearic acid | | 1 | 1 | 1 | 1 | 1 |
| Nocrac 300 | | 0.5 | 0.5 | 0.5 | 0.5 | 0.5 |
| Dicumyl peroxide | | 3 | 3 | 3 | 3 | 3 |
| Antimony trioxide | | 10 | 10 | 10 | 10 | 10 |
| Condensed bromoacenaphthylene | | 30 | 30 | 30 | 30 | 30 |
| White lead | | 5 | | 5 | | |
| Tribase | | | 10 | | | |
| Lead sulfate | | | | | | 10 |
| Specific surface area of lead compound ($m^2/g$) | | 1.20 | 1.92 | 1.20 | - | - |
| Moldability of sheet | | Excellent | Excellent | Excellent | No ggod *6 | No good *6 |
| Gel fraction (wt.%) *7 | | 73.5 | 74.2 | 75.0 | 45.9 | 51.1 |
| Heat deformation (%) *8 | | 13.0 | 13.9 | 13.8 | 43.7 | 42.4 |
| (Radiation resistance) | | | | | | |
| Initial | Tensile strength ($kg/mm^2$) | 1.87 | 1.80 | 2.13 | 1.37 | 1.43 |
| | Elongation (%) | 400 | 370 | 380 | 420 | 473 |
| After irradiation | Tensile strength ($kg/mm^2$) | 1.36 | 1.33 | 1.50 | 0.83 | 0.88 |
| | Elongation (%) | 145 | 137 | 130 | 78 | 90 |
| (Fire resistance) | | | | | | |
| Oxygen index | | 28.9 | 29.4 | 29.0 | 27.2 | 27.4 |

| Formulating agent and characteristics item | | Example 10 | Example 11 | Example 12 | Comparative example 9 | Comparative example 10 |
|---|---|---|---|---|---|---|
| (Hot-water resistance) | | | | | | |
| Initial | Volume resistance (Ω-cm) | $2.2x10^{16}$ | $2.0x10^{16}$ | $7.0x10^{15}$ | $1.4x10^{16}$ | $6.4x10^{15}$ |
| | Dielectric breakdown voltage (kV/mm) | 31.0 | 30.5 | 27.6 | 30.0 | 27.9 |
| After exposure | Volume resistance (Ω-cm) | $2.4x10^{16}$ | $1.8x10^{16}$ | $6.4x10^{15}$ | $7.1x10^{12}$ | $5.0x10^{11}$ |
| | Dielectric breakdown voltage (kV/mm) | 30.4 | 30.5 | 27.0 | 13.5 | 8,3 |

*4 Density: 0.920, MI:1.0

*5 Density: 0.940, MI:2,5, Content of vinylacetate: 19 %

*6 Because of surface burning, smooth sheet could not be obtained.

*7 Determined after immersed for 24 hours at 120 °C in xylene.

*8 Measured after loaded with 3 kg at 120 °C.

Example 13 through 16

To ethylene-propylene-diene copolymer, the formulating agents were added so as to get the composition shown in Table 5.

Sheets were made according to the processing recipe in Example 6 through 9 and the estimation of performance of molded sheets were made by the method in said examples. The results are shown in Table 5.

Besides, with regard to the condensed bromoacenaphthylene composition, the one used in Example 13 and 14 is same as in Example 1 and the one used in Example 15 and 16 is same as in Example 6.

Table 5

| Formulating agent and characteristics item | | Example 13 | Example 14 | Example 15 | Example 16 |
|---|---|---|---|---|---|
| Ethylene-propylene-diene copolymer *1 | | 100 | 100 | 100 | 100 |
| Nocrac 224 *2 | | 1.5 | 1.5 | 1.5 | 1.5 |
| Sulfur | | 0.4 | 0.4 | 0.4 | 0.4 |
| Talc | | 100 | 100 | 100 | 100 |
| Zinc white | | 5 | 5 | 5 | 5 |
| Stearic acid | | 1 | 1 | 1 | 1 |
| Antimony trioxide | | 11.8 | 11.8 | 11.8 | 11.8 |
| Dicumyl peroxide | | 3 | 3 | 3 | 3 |
| Condensed bromoacenaphthylene | | 45 | 45 | 45 | 45 |
| White lead | | 15 | | | 30 |
| Tribase | | | 15 | | |
| Litharge | | | | 30 | |
| m-(m-Phenoxyphenoxy)diphenyl | | 5 | | 5 | |
| Monoalkyldiphenyl ether | | | 5 | | 10 |
| Specific surface area of lead compound ($m^2/g$) *3 | | 1.20 | 1.92 | 0.34 | 1.20 |
| (Radiation resistance) | | | | | |
| Initial | Tensile strength ($kg/mm^2$) | 0.86 | 0.88 | 0.82 | 0.91 |
| | Elongation (%) | 630 | 660 | 700 | 675 |
| After irradiation | Tensile strength ($kg/mm^2$) | 0.87 | 0.82 | 0.80 | 0.90 |
| | Elongation (%) | 150 | 155 | 160 | 145 |
| (Fire resistance) | | | | | |
| Oxygen index | | 34.6 | 34.4 | 35.2 | 35.0 |

| Formulating agent and characteristics item | | Example 13 | Example 14 | Example 15 | Example 16 |
|---|---|---|---|---|---|
| (Hot-water resistance) | | | | | |
| Initial | Volume resistance (Ω-cm) | $3.9\times10^{15}$ | $4.4\times10^{15}$ | $5.0\times10^{15}$ | $4.5\times10^{15}$ |
| | Dielectric breakdown voltage (kV/mm) | 24.8 | 23.0 | 24.4 | 23.7 |
| After exposure | Volume resistance (Ω-cm) | $4.2\times10^{15}$ | $4.0\times10^{15}$ | $4.6\times10^{15}$ | $4.4\times10^{15}$ |
| | Dielectric breakdown voltage (kV/mm) | 25.0 | 22.6 | 24.1 | 24.2 |

*1 Made by Japan Synthetic Rubber Co., EP-21 (Bonding amount of propylene: 40 % by weight).

*2 Made by Oouchi Shinko Co., 2,2,4-trimethyl-1,2-dihydroquinoline copolymer.

*3 Determined by BET method.

From the foregoing examples, it is understood that the incorporation of a basic lead compound of the present invention into a high molecular composition containing a halogenated acenaphthylene and/or condensates thereof provides a remarkable improvement of the hot-water resistance, the excellent radiation and fire resistance thereof not being adversely affected.

Further, in the case of a crosslinked polyethylene composition, it is evident that the problems of processibility and heat deformation are solved in addition to the improvement in the hot-water resistance and the addition also improves the radiation resistance.

On the other hand, compositions formulated with nonbasic lead compounds lead such as lead chloride and lead sulfate, as illustrated in Comparative example 8 and 10, hardly show an improvement of the hot-water resistance, even though the amount added may be increased.

Example 17 through 19 and Comparative example 11 through 13

After the kneading and granulation, the compositions in Example 1, 6 and 14 and Comparative example 5 and 6 were extruded for coating a tin-plated twisted wire made from soft copper with a cross sectional area of 2 $mm^2$ in a thickness of 0.8 mm. The coating was continuously vulcanized by heating under the conditions shown in Table 6 to give the desired electric wires.

The insulated electric wire thus obtained was irradiated with 200 Mrad of $\gamma$-rays at a dose rate of 0.5 Mrad/hr at room temperature in the air. After the $\gamma$-ray irradiation the insulated electric wire was exposed to high-temperature steam of 150 °C and 4.9 $kg/cm^2$ for 24 hours.

The mechanical and electrical characteristics of the insulated electric wire were estimated before and after the irradiation and after the exposure to steam. The results are shown in Table 6.

Table 6

| Item | | Example 17 | Example 18 | Example 19 | Comparative example 11 | Comparative example 12 | Comparative example 13 |
|---|---|---|---|---|---|---|---|
| Composition of insulating material | | Example 1 | Example 6 | Example 14 | Comparative exa-mple 5 | Comparative exa-mple 5 | Comparative exa-mple 6 |
| Heat vulcanization condition | | 1) Molten salt | Nitrogen gas 2) | 3) Steam | 1) Molten salt | 3) Steam | 1) Molten salt |
| (Initial values) | | | | | | | |
| Mechanical characteristics | Tensile strength (kg/mm²) | 0.85 | 0.80 | 0.88 | 0.80 | 0.65 | 0.88 |
| | Elongation (%) | 520 | 500 | 610 | 530 | 620 | 550 |
| Dielectric breakdown voltage (kV) 4) | | 27 | 23 | 22 | 25 | 22 | 23 |
| (After irradiation of γ-rays) | | | | | | | |
| Mechanical characteristics | Tensile strength (kg/mm²) | 0.88 | 0.88 | 0.85 | 0.85 | 0.60 | 0.87 |
| | Elongation (%) | 140 | 130 | 150 | 140 | 150 | 140 |
| (After exposure to steam) | | | | | | | |
| Mechanical characteristics | Tensile strength (kg/mm²) | 0.55 | 0.52 | 0.55 | 0.45 | 0.33 | 0.55 |
| | Elongation (%) | 110 | 110 | 120 | 100 | 90 | 110 |
| Withstand voltage test 5) | | Acceptable | Acceptable | Acceptable | Rejected | Rejected | Rejected |

1) Heat medium is an inorganic salt mixture with a melting point of 142 °C, the main components thereof being sodium nitrate, potassium nitrate and sodium nitrite. Bath temperature: 200°C, Pressure of nitrogen gas: 3 kg/cm²
2) Temperature of vulcanization tube: 200°C, Pressure of nitrogen gas: 5 kg/cm²
3) Temperature of steam: 190°C, Pressure: 12 kg/cm²
4) 5 m of insulated electric wire were immersed into water and alternating voltage was charged between conductor and water at a rate of 30 kV/min to determine the voltage when the insulating material was broken down.

5) 1 m of insulated electric wire was wound after exposure to steam around a metallic mandrel with an outer diameter of 15 mm, and was immersed into water. Alternating voltage was applied for 5 minutes between conductor and water at a rate of 2.6 kV, and it was observed whether the insulating material was broken.

The wires of Example 17 through 19 are acceptable because they withstand the voltage test even after exposure to steam. By contrast those of Comparative example 11 through 13 were all rejected. With the wire of Example 17, the determination of the breakdown voltage after the voltage test resulted in 15 kV showing a sufficient tolerance, whereas the wire of Example 19 showed 6 kV being a somewhat lower result. Therefore, it was made clear that, as the heat vulcanization medium the molten salt was superior to the steam.

Example 20 through 22 and Comparative example 14 through 16

After the kneading and granulation, the compositions in Example 5 and 10 and Comparative example 3 and 4 were extruded for coating a twisted wire made from soft copper with a cross sectional area of 5.5 $mm^2$ in a thickness of 1 mm.
Then, the coating was continuously vulcanized by heating under the conditions shown in Table 7 to give the desired electric wires.

The insulating electric wire thus obtained was irradiated with 200 Mrad of $\gamma$-ray at a dose rate of 0.5 Mrad/hr at room temperature in the air. After the $\gamma$-ray irradiation the insulated electric wire was exposed to high-temperature steam of 150 °C and 4.9 $kg/cm^2$ for 24 hours.
The mechanical and electrical characteristics of the insulated electric wire were estimated before and after the irradiation and after the exposure to steam. The results are shown in Table 7.

Table 7

| Item | | Example | | | Comparative example | | |
|---|---|---|---|---|---|---|---|
| | | 20 | 21 | 22 | 14 | 15 | 16 |
| Composition of insulating material | | Example 5 | Example 10 | Example 10 | Comparative example 3 | Comparative example 3 | Comparative example 4 |
| Heat vulcanization condition | | 1) Molten salt | Molten salt | Steam 1) | Steam | Molten salt | Steam |
| ( Initial values ) | | | | | | | |
| Mechanical characteristics | Tensile strength (kg/mm²) | 1.85 | 1.77 | 1.89 | 1.72 | 1.70 | 2.25 |
| | Elongation(%) | 400 | 390 | 400 | 370 | 350 | 500 |
| Dielectric breakdown voltage (kV) 1) | | 29 | 32 | 29 | 22 | 29 | 55 |
| (After γ-ray irradiation) | | | | | | | |
| Mechanical characteristics | Tensile strength (kg/mm²) | 1.81 | 1.59 | 1.55 | 1.40 | 1.42 | 1.30 |
| | Elongation(%) | 130 | 140 | 130 | 90 | 100 | 20 |
| (After exposure to steam) | | | | | | | |
| Mechanical characteristics | Tensile strength (kg/mm²) | 1.35 | 1.30 | 1.27 | 1.35 | 1.37 | 1.35 |
| | Elongation(%) | 100 | 120 | 120 | 70 | 70 | 20 |
| Withstand voltage test 2) | | Acceptable | Acceptable | Acceptable | Rejected | Rejected | Rejected |

1) Same conditions as the footnotes of Table 6.
2) 1 m of insulated electric wire was wound after exposure to steam around a metallic mandrel with an outer diameter of 200 mm, and was immersed into water. Alternating voltage was applied for 5 minutes between conductor and water at a rate of 3.5 kV, and it was observed, whether the insulating material was broken.

The wires of Example 20 through 22 are acceptable because they withstand the voltage test even after exposure to steam. By contrast, those of Comparative example 14 through 16 were all rejected. With the wire of Example 21, the determination of the breakdown voltage after the voltage test resulted in 18 kV showing a sufficient tolerance, whereas the wire of Example 22 showed 7 kV being a somewhat lower result. Therefore, it was made clear that, as the heat vulcanization medium, the molten salt was superior to the steam.

As described above, the addition of diphenyl ether derivatives and/or basic lead compounds provides uniform dispersion of the halogenated acenaphthylene and/or condensates thereof in the high molecular polymer and excellent hot-water resistance of the high molecular compositions. Therefore, because of the stable radiation resistance, the high molecular compositions of the present invention are extremely useful for construction materials, covering insulation materials, packings, sealing materials, etc.

## Claims

(1) A radiation-resistant high molecular composition comprising a high molecular polymer, a halogenated acenaphthylene and/or condensate thereof represented by the following general formula [I]

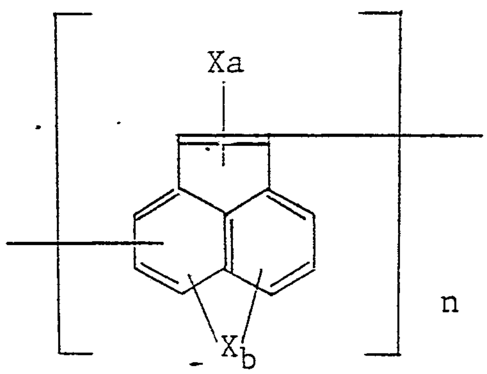

[I]

(wherein X indicates a chlorine or bromine atom, a indicates 0 to 2, b indicates 1 to 6 and n indicates an integer not less than 1), a diphenyl ether derivative represented by the following general formula [II]

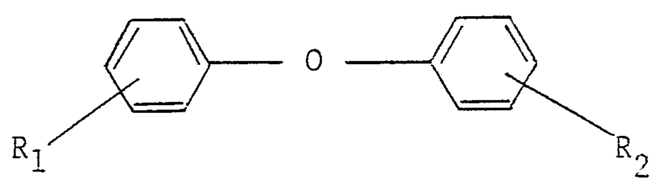

[II]

(wherein $R_1$ and $R_2$ independently indicate a hydrogen atom, an alkyl, alkoxy, phenyl phenoxy, diphenyloxy or a terphenyloxy group) and/or a basic lead compound.

(2) The high molecular composition of Claim 1, wherein the amount of said halogenated acenaphthylene and/or condensate thereof is 5 to 150 parts by weight per 100 parts by weight of the high molecular polymer.

(3) The high molecular composition of Claim 1, wherein the amount of said diphenyl ether derivative is 1 to 100 parts by weight per 100 parts by weight of said halogenated acenaphthylene and/or condensate thereof.

(4) The high molecular composition of Claim 1, wherein said basic lead compound is lead oxide, lead hydroxide, lead phosphate, lead phosphite, lead carbonate, lead sulfite, lead carboxylate, lead sulfide, lead borate and/or lead metaborate or a double salt containing at least one of these compounds as components.

(5) The high molecular compound of Claim 1, wherein said basic lead compound is a powder whose specific surface area is at least 0.1 $m^2/g$.

(6) The high molecular compound of Claim 1, wherein the amount of said basic lead compound is 10 to 100 parts by weight per 100 parts by weight of said halogenated acenaphthylene and/or condensate thereof.

(7) The high molecular compound of Claim 1, wherein said high molecular polymer is a thermoplastic resin, thermosetting resin and/or a natural or synthetic rubber.

(8) The high molecular compound of Claim 1, wherein the high molecular polymer is a polyolefin resin or an elastomer.

(9) An electric wire or cable comprising the radiation-resistant high molecular compound of any one of Claims 1 to 8 as a covering material.

(10) A method of manufacturing the electric wire or cable of claim 9 characterized in that, a conductor is covered with the radiation-resistant high molecular composition of any one of Claims 1 to 8, and the composition is cross-linked by an organic peroxide crosslinking agent under moisture-free consitions.

(11) The method of Claim 10, wherein said moisture-free conditions include the use of a molten salt bath.

(12) The method of Claim 11, wherein said molten salt bath contains sodium nitrate, potassium nitrate and sodium nitrite as major components.

Fig. 1

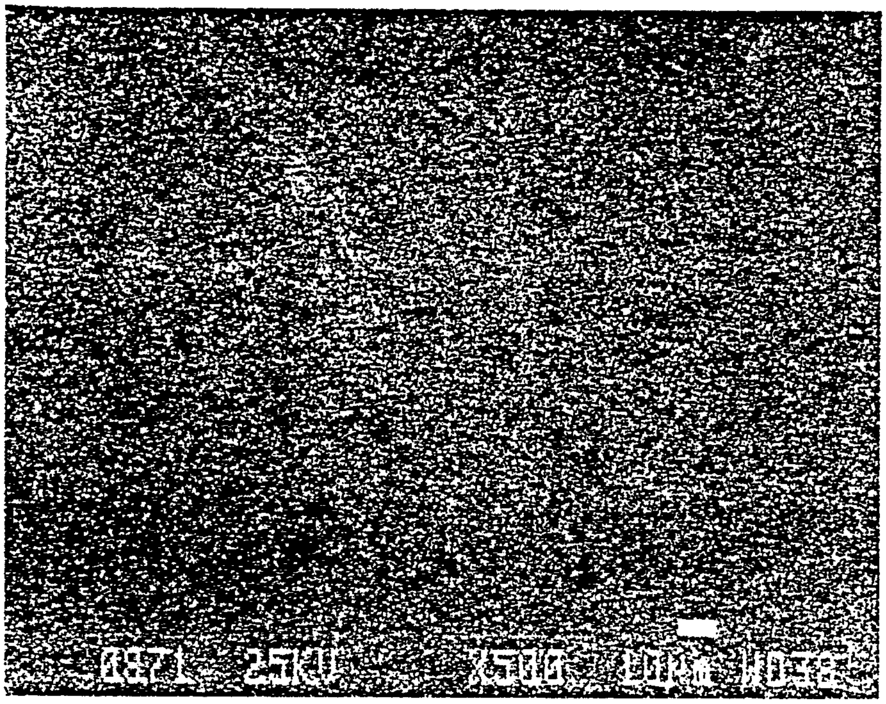


Fig. 2